(19) Europäisches Patentamt / European Patent Office / Office européen des brevets

(11) **EP 2 158 257 B1**

(12) **FASCICULE DE BREVET EUROPEEN**

(45) Date de publication et mention de la délivrance du brevet:
**20.01.2021 Bulletin 2021/03**

(21) Numéro de dépôt: **08709164.1**

(22) Date de dépôt: **21.02.2008**

(51) Int Cl.:
*C08J 9/12* *(2006.01)*     *C08J 9/00* *(2006.01)*

(86) Numéro de dépôt international:
**PCT/EP2008/052133**

(87) Numéro de publication internationale:
**WO 2008/107313 (12.09.2008 Gazette 2008/37)**

(54) **ARTICLES POLYAMIDES MICROCELLULAIRES**

**MIKROZELLIGE POLYAMIDGEGENSTÄNDE**

**MICROCELLULAR POLYAMIDE ARTICLES**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.02.2007 FR 0701301**

(43) Date de publication de la demande:
**03.03.2010 Bulletin 2010/09**

(73) Titulaire: **Performance Polyamides, SAS 75009 Paris (FR)**

(72) Inventeur: **BRADLEY, Gérard 69126 Brindas (FR)**

(74) Mandataire: **BASF IP Association BASF SE G-FLP-C6 67056 Ludwigshafen (DE)**

(56) Documents cités:
**FR-A- 2 154 633     JP-A- 2005 126 545**
**US-A1- 2001 035 085     US-A1- 2005 187 322**

- **DATABASE WPI Week 200357 Thomson Scientific, London, GB; AN 2003-600953 XP002463297 & JP 2002 363326 A (TORAY IND INC) 18 décembre 2002 (2002-12-18)**

**Description**

L'invention concerne l'utilisation d'une composition comprenant une matrice polyamide et des additifs, dans ou pour la fabrication d'un article polyamide microcellulaire par moulage par injection utilisant un fluide à l'état supercritique, une formulation à l'état fondu comprenant ladite composition et un fluide à l'état supercritique, et un procédé de fabrication d'articles polyamides microcellulaires par moulage par injection ainsi que l'utilisation de ces articles allégés dans diverses applications.

## ART ANTERIEUR

Parmi les propriétés que l'on cherche souvent à améliorer pour un matériau polyamide destiné à être mis en forme par des techniques diverses, notamment de moulage par injection, on cite la rigidité, la résistance aux chocs, la stabilité dimensionnelle, en particulier à température relativement élevée, le faible retrait après mise en forme, l'aspect de surface, la densité et le poids. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts.

On cherche notamment à produire des articles polyamides ayant un poids diminué notamment pour leur application dans le domaine de l'automobile.

Pour obtenir des articles polyamides allégés et performants, il est connu d'utiliser des mousses polyamides. On utilise pour ce faire classiquement des voies chimiques ou des voies physiques. Un tel procédé est généralement connu sous la dénomination FIM, pour foam injection molding. On peut citer à cet effet les quelques considérations du brevet US5158986.

JP2002 363326 A divulgue l'utilisation d'une composition comprenant une matrice polyamide et des additifs tels que des fibres de verre ou des fibres de carbone pour la fabrication d'un article polyamide microcellulaire par moulage par injection utilisant un fluide à l'état supercritique. Le polyamide utilisé est obtenu par polymérisation en présence d'acide benzoïque.

JP2005 126545 A divulgue une mousse de polyamide composée d'un polyamide comprenant une unité d'acide dicarboxylique (a) contenant 50-100 % en moles d'une unité d'acide téréphtalique et une unité de diamine (b) contenant 50-100 % en moles d'une unité diamine aliphatique 6-18C et a un rapport d'expansion de 1,01-1,25 et une taille de mousse $\leq$ 100 $\mu$m. Le polyamide utilisé est obtenu par polymérisation en présence d'acide benzoïque.

US2005/187322 A1 divulgue l'utilisation d'une composition comprenant une matrice polyamide, un plastifiant tel que l'acide téréphtalique ou isophtalique et des additifs tels que des fibres de verre pour la fabrication d'un article polyamide microcellulaire par moulage par injection utilisant un fluide à l'état supercritique.

Une des méthodes les plus utilisée consiste à incorporer un fluide supercritique (SCF), lors du procédé de moulage par injection, dans un polymère à l'état fondu sous pression, notamment dans le cylindre de plastification ou dans le bec d'injection. Un fluide supercritique est un matériau qui est maintenu à une température qui excède sa température critique Tc et à une pression qui excède sa pression critique Pc. Les fluides supercritiques et leurs caractéristiques sont bien connus et sont notamment mentionnés dans la publication suivante : « Microcellular Processing » : K. T. Okamoto, C. Hanser Verlag, Munich 2003, page 6. Sous l'influence d'une forte pression dans un appareil de moulage par injection approprié, le fluide supercritique est soluble dans le matériau plastique fondu (voir notamment "Supercritical carbon dioxide in polymer reaction engineering" Ed, Maartje F. Kemmere, Thierry Meyer. Wiley-VCH Verlag GmbH & Co. KGaA. 2005, page 6). Durant l'injection du polymère dans la chambre de moulage, une réduction rapide de la pression conduit alors à une instabilité thermodynamique qui entraîne une baisse de la solubilité dudit fluide dans le polymère fondu. Cette diminution de la solubilité du fluide supercritique induit une nucléation et la croissance de cellules, et ainsi la formation d'un matériau microcellulaire, de type mousse.

Les articles ainsi moulés sont allégés et il est parfaitement possible de contrôler la masse et la densité de l'article final en fonction de la quantité de polymère utilisé et injecté dans le moule. En effet, le fluide supercritique permet la formation de cellules qui occupent le volume manquant du matériau dans le moule. Par exemple, pour obtenir une diminution de 10 % du poids, on injecte dans la chambre de moulage 10 % en moins de matériau polyamide.

Toutefois, dans le cas du polyamide, il apparaît qu'un tel procédé conduit à la formation d'un article microcellulaire présentant un mauvais aspect de surface, en absence ou en présence de charges de renforts. En effet, on observe des zones de blanchiment sur la surface, des rugosités et une perte de brillance et de réflectivité. Ce mauvais aspect de surface est directement corrélable au procédé de formation d'articles microcellulaires utilisant un fluide supercritique.

Or un mauvais aspect de surface de ces articles rend inopérant leur utilisation pour des pièces esthétiques, notamment dans le secteur de l'automobile ou ménager.

Il existe ainsi un besoin de produire des polyamides microcellulaires allégés présentant un bon compromis de propriétés mécaniques et un aspect de surface satisfaisant, comparable à celui que l'on peut obtenir avec un procédé classique de moulage par injection.

## INVENTION

La demanderesse a trouvé de manière tout a fait surprenante que l'utilisation d'un polyamide de haute fluidité en fondue dans un procédé de moulage par injection utilisant un fluide supercritique pour la réalisation d'articles polyamides microcellulaires allégés permettait de palier aux inconvénients mentionnés ci-dessus. En effet, une telle utilisation permet l'obtention d'articles présentant un aspect de surface très satisfaisant, comparable à celui que l'on peut obtenir avec un procédé classique de moulage par injection. Le procédé a par ailleurs l'avantage d'être simple a mettre en œuvre et ne nécessite pas l'utilisation d'autres additifs chimiques de moussage particuliers pouvant être coûteux ou participer à la réduction des propriétés rhéologiques et mécaniques de la composition polyamide.

La présente invention concerne ainsi l'utilisation d'une composition comprenant au moins une matrice polyamide et éventuellement des additifs, dans ou pour la fabrication d'un article polyamide microcellulaire par moulage par injection utilisant un fluide à l'état supercritique ;

ladite composition polyamide présentant une viscosité apparente en phase fondue selon les relations suivantes :

$$\eta100 \leq 12,82(X) + 239$$

$$\eta1000 \leq 3,62(X) + 139$$

dans lesquelles $\eta$ est la viscosité apparente en phase fondue de la composition polyamide mesurée à une température de 15°C supérieure à la température de fusion de la composition polyamide ; soit à un taux de cisaillement de 100 s$^{-1}$, $\eta100$, soit à un taux de cisaillement de 1000 s$^{-1}$, $\eta1000$ ; et X correspond à la proportion en poids d'additifs dispersés de manière hétérogène dans la matrice polyamide, par rapport au poids total de la composition ; le polyamide étant un polyamide 6, un polyamide 66, un copolyamide 66.6 ; et les additifs dispersés de manière hétérogène dans la matrice polyamide étant des additifs solides organiques ou inorganiques, polymériques ou non, qui se dispersent dans la phase continue du polyamide et ne sont pas solubilisés dans la phase continue du polyamide ; caractérisée en ce que le polyamide est un polyamide étoile comprenant des chaînes macromoléculaires étoiles et le cas échéant des chaînes macromoléculaires linéaires, obtenu par mélange en polymérisation, en présence des monomères de polyamide, d'au moins un composé multifonctionnel comprenant au moins 3 fonctions réactives identiques de type fonction amine ou fonction acide carboxylique.

L'invention concerne aussi une formulation à l'état fondu comprenant au moins une composition comprenant au moins une matrice polyamide et éventuellement des additifs, présentant une viscosité apparente en phase fondue selon les relations mentionnées précédemment, et un fluide à l'état supercritique. La présente invention concerne notamment une formulation à l'état fondu susceptible d'être obtenu par mélange en fondu d'une composition comprenant au moins une matrice polyamide et éventuellement des additifs, présentant une viscosité apparente en phase fondue selon les relations mentionnées précédemment, et un fluide à l'état supercritique.

Une telle formulation existe notamment sous pression dans le cylindre de plastification du procédé de fabrication d'un article polyamide microcellulaire par moulage par injection.

L'invention concerne également un procédé de fabrication d'un article polyamide microcellulaire par moulage par injection comprenant au moins les étapes suivantes :

a) réaliser une formulation à l'état fondu par mélange d'une composition comprenant moins une matrice polyamide fondue et éventuellement des additifs, présentant une viscosité apparente en phase fondue selon les relations mentionnées précédemment, avec un fluide à l'état supercritique, de façon à dissoudre ledit fluide à l'état supercritique dans la matrice ;

b) injecter la formulation obtenue dans la chambre de moulage de l'appareil de moulage par injection en soumettant ladite composition à une baisse de pression pour provoquer la nucléation et la croissance de cellules ; et

c) laisser le mélange obtenu se solidifier en tant qu'article polyamide microcellulaire dans la chambre de moulage.

Selon un mode préférentiel de l'invention, la faible viscosité apparente de la composition selon l'invention, suivant les relations mentionnées précédemment, est due à l'utilisation d'une matrice polyamide ayant une faible viscosité apparente.

Des polyamides de faible viscosité peuvent notamment être obtenus en contrôlant leur poids moléculaire lors de leur synthèse, et donc leur fluidité en fondue, notamment par l'addition avant ou pendant la polymérisation des monomères de polyamide, de monomères modifiant la longueur des chaînes, tel que notamment des diamines, diacides carboxyliques, monoamines et/ou monoacides carboxyliques.

Des polyamides selon l'invention peuvent aussi être obtenu par mélange, notamment en fondu, de polyamides avec des monomères modifiant la longueur des chaînes, tel que notamment des diamines, diacides carboxyliques, monoamines et/ou monoacides carboxyliques. On peut notamment ajouter au polyamide de l'acide isophtalique ou de l'acide benzoïque, par exemple à des teneurs d'environ 0,2 à 0,5 % en poids.

Les polyamides selon l'invention sont :

- le polyamide 66
- le polyamide 66, notamment modifié par ajout à la synthèse d'un monoacide carboxylique, tel que l'acide acétique ou l'acide benzoïque ;
- le copolyamide 66.6, notamment modifié par ajout à la synthèse d'un monoacide carboxylique, tel que l'acide acétique ou l'acide benzoïque ;
- le polyamide 66 modifié par ajout en fondu d'un monoacide ou diacide carboxylique ; et
- le polyamide 6.

On utilise comme polyamide de haute fluidité un polyamide étoile comprenant des chaînes macromoléculaires étoiles et le cas échéant des chaînes macromoléculaires linéaires. Les polymères comprenant de telles chaînes macromoléculaires étoiles sont par exemple décrits dans les documents WO97/24388 et WO99/64496.

Ces polyamides étoiles sont notamment obtenus par mélange en polymérisation, en présence des monomères de polyamide, un aminoacide ou lactame tel que le caprolactame, d'au moins un composé multifonctionnel comprenant au moins 3 fonctions réactives identiques de type fonction amine ou fonction acide carboxylique. Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut notamment utiliser des polyamides branchés de haute fluidité notamment obtenus par mélange en polymérisation, en présence des monomères de polyamide, d'au moins un composé multifonctionnel comprenant au moins 3 fonctions réactives identiques de type fonction amine ou fonction acide carboxylique.

De préférence, les composés multifonctionnels sont choisis dans le groupe comprenant : la 2,2,6,6-tetrakis-(β-carboxyéthyl)-cyclohexanone, l'acide trimésique, la 2,4,6-tri-(acide aminocaproique)-1,3,5-triazine et la 4-aminoéthyle-1,8-octanediamine.

La composition selon l'invention peut comprendre entre 30 et 90 % en poids, préférentiellement entre 40 et 80 % en poids, de polyamide, par rapport au poids total de la composition.

On peut notamment utiliser selon la présente invention des polyamides ayant une cinétique de cristallisation retardée. On peut notamment utiliser des additifs bien connus qui vont diminuer la cinétique de cristallisation du polyamide, tel que notamment de la nigrosine. On peut également ajouter des polyamides ou copolyamides qui vont diminuer la température de cristallisation du polyamide.

La viscosité apparente en phase fondue de la composition polyamide peut être mesurée selon la norme ISO 11443, notamment en utilisant un rhéomètre capillaire Göttfert Rheograph 2002. On peut par exemple utiliser un capillaire de longueur 30 mm et de diamètre 1 mm.

On mesure la viscosité apparente en phase fondue de la composition polyamide à une température de 15°C supérieure à la température de fusion de la composition polyamide. La température de fusion de la composition polyamide peut être mesurée par DSC « METTLER DSC 20 », selon la norme ISO 11357-3, avec une augmentation de température de 10°C/min. Ainsi, par exemple, pour une composition à base de polyamide 6 présentant une température de fusion de 220°C, la viscosité apparente en phase fondue sera mesurée à une température de 235°C.

Comme explicité précédemment, la composition polyamide peut comprendre des additifs dispersés de manière hétérogène dans la matrice polyamide. On entend au sens de l'invention par additifs dispersés de manière hétérogène dans la matrice polyamide, des additifs solides organiques ou inorganiques, polymériques ou non, qui se dispersent dans la phase continue du polyamide. Ces additifs sont dits dispersés de manière hétérogène dans la mesure ou ils ne sont pas solubilisés dans la phase continue du polyamide.

X peut par exemple être compris entre 0,1 et 70 % en poids, par rapport au poids total de la composition, préférentiellement entre 10 et 60 % en poids, plus préférentiellement entre 15 et 50 % en poids.

Les additifs selon l'invention peuvent notamment être des charges de renfort et de remplissage choisies dans le groupe comprenant des fibres de verre, des fibres de carbone, ou des charges minérales telles que le kaolin, le carbonate de calcium, le talc ou la wollastonite, des billes de verre, de la poudre de verre, ou encore des nanocharges exfoliables ou non exfoliables. La concentration pondérale des charges de renfort est comprise avantageusement entre 0,1 % et 50 % en poids par rapport au poids total de la composition, de préférence entre 10 et 40 % en poids.

Des fibres de verre courtes ou longues peuvent notamment être ajoutées au polyamide pour réaliser la composition selon l'invention.

Les additifs peuvent être aussi des agents modificateurs de la résistance aux chocs, tels que notamment les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères d'éthylène, de propylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques. La concentration pondérale en élastomère est avantageusement comprise entre 0,1 et 15 % par rapport au poids total de la composition.

Les additifs dispersés de manière hétérogène peuvent être aussi des polymères, tels que des polyoléfines, des polyesters, des polyéthers, des polyéthers blocs amides, des polyphénylènes éther, des polyphénylènes sulfides, des acrylonitriles butadiène styrènes (ABS) ou des polystyrènes, notamment des polystyrènes syndiotactiques, utilisés pour former un alliage de polyamide et d'un ou plusieurs desdits polymères.

Les additifs dispersés de manière hétérogène de l'invention peuvent également être des composés ignifugeants organiques ou inorganiques, tels que notamment les dérivés halogénés, tels que les bromostyrènes, les dérivés de la mélamine, tel que le cyanurate de mélamine ou le polyphosphate de mélamine, le phosphore rouge, les sels métalliques d'alkyl phosphinates, l'hydroxyde de magnésium, le $Sb_2O_3$, et le borate de zinc.

Si plusieurs additifs dispersés de manière hétérogène sont présents dans la composition polyamide, on additionne leur proportion en poids pour la valeur de X dans les relations définies précédemment.

Par exemple, pour une composition polyamide comprenant 30 % en poids de d'additifs dispersés de manière hétérogène, la viscosité apparente en phase fondue à ne pas dépasser est de 624 Pa.s pour un cisaillement de 100 s$^{-1}$ ($\eta$100), et de 248 Pa.s pour un cisaillement de 1000 s$^{-1}$ ($\eta$1000).

Les compositions de l'invention peuvent également comprendre tous les additifs habituellement utilisés dans les compositions à base de polyamide utilisées pour la fabrication d'articles moulés. Ainsi, on peut citer à titre d'exemple d'additifs les stabilisants thermiques, les stabilisants UV, les antioxydants, les lubrifiants, les pigments, colorants, plastifiants ou des agents modifiant la résistance aux chocs. A titre d'exemple, les antioxydants et stabilisants chaleur sont, par exemple, des halogénures d'alcalins, des halogénures de cuivre, les composés phénoliques stériquement encombrés, les amines aromatiques. Les stabilisants U.V. sont généralement des benzotriazoles, des benzophénones ou des HALS.

On entend par nucléation l'état transitoire quand le fluide à l'état supercritique se trouve à l'état de gaz, suite à la baisse de pression, sous forme de bulles en suspension dans le polyamide fondu. La nucléation peut être obtenue en assujettissant la composition fluide comprenant le polyamide et le fluide à l'état supercritique à une instabilité thermodynamique rapide, provoquée par exemple par une baisse de la température et/ou de la pression. La diminution de la solubilité du fluide supercritique induit une nucléation et la croissance de cellules, et ainsi la formation d'un matériau microcellulaire, de type mousse.

Comme fluide à l'état supercritique, on utilise préférentiellement le dioxyde de carbone et l'azote $N_2$. On peut notamment citer à cet effet la publication de R. Lacallade, Plastics Engineering, Vol 32, June 1976, pp 40-42, la référence Supercritical Carbon Dioxide in Polymer Reaction Engineerin, edited by M.F. Kemmere and T. Meyer, WILEY-VCH, 2005, pp 3-6, et le brevet US3796779.

On utilise préférentiellement entre 0,01 et 3 % en poids, préférentiellement entre 0,01 et 1 % en poids, plus préférentiellement entre 0,05 et 0,5 % en poids, de fluide à l'état supercritique par rapport au poids total de la formulation.

Pour mettre en œuvre le procédé de l'invention, on peut utiliser un dispositif de moulage par injection adéquat comprenant par exemple un cylindre de plastification, pour lequel la pression peut être réglée, relié à un ou plusieurs injecteurs de gaz sous pression. Le fluide à l'état supercritique peut notamment être ajouté au polyamide à l'état fondu dans le cylindre de plastification ou encore au niveau du nez du cylindre de plastification, juste avant l'injection dans le moule.

Un tel dispositif est construit et agencé pour soumettre la formulation fondue à une baisse de pression suffisante pour provoquer la nucléation et la croissance des cellules, tout en faisant passer cette composition dans la chambre de moulage. Ces dispositifs sont bien connus du domaine et on peut citer à titre d'exemple la demande EP1264672 relatif à un tel dispositif.

Le fluide à l'état supercritique est généralement dispersé et solubilisé dans la matrice à l'état fondu.

La vitesse d'injection lors du procédé de moulage par injection pour la réalisation d'articles microcellulaires est généralement plus élevée que la vitesse classiquement utilisée pour les procédés de moulage par injection standards.

Il est à noter que la chambre de moulage peut être construite pour contenir la formulation à une pression élevée de façon à contrôler la croissance des cellules.

La température du moule, dans la chambre de moulage, est préférentiellement comprise entre 20 et 120°C, plus préférentiellement comprise entre 50 et 120°C.

Les articles allégés obtenus selon l'invention comprennent généralement des cellules fermées (close-cell) ayant notamment un diamètre compris entre 1 et 100 $\mu$m, préférentiellement entre 1 et 50 $\mu$m. La proportion de volume de vide dans l'article microcellulaire peut être comprise entre 2 et 50 %, préférentiellement entre 2 et 40 %, plus préférentiellement entre 2 et 30 %, notamment entre 5 et 15 %, par rapport au volume total.

Les articles de l'invention peuvent être par exemple des articles pour l'industrie automobile, en particulier pour la fabrication de pièces de carrosserie ou d'intérieur, des composants électriques ou électroniques et des accessoires pour différentes activités telles que les activités sportives, par exemple.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnement peuvent notamment être envisagé par une personne au fait du domaine technique concerné sur la base de ses propres connaissances générales.

Le terme et/ou inclut les significations et, ou ainsi que toutes les autres combinaisons possibles des éléments connectés à ce terme.

D'autres détails ou avantages de l'invention apparaîtront plus clairement au vu des exemples donnés ci-dessous uniquement à titre indicatif.

## PARTIE EXPERIMENTALE

### Exemple 1 : Fabrication des articles

Les composés utilisés dans la présente partie expérimentale sont les suivants :

- Fibres de verre pour extrusion ayant une longueur de 4,5 mm et un diamètre de 10 $\mu$m.
- Additifs : colorants, agents stabilisants et agents d'aide au moulage.
- PA1 : polyamide 6 étoile obtenu par copolymérisation à partir de caprolactame en présence de 0,05 % en mol de 2,2,6,6-tetrakis-($\beta$-carboxyéthyl)-cyclohexanone et 0,45 % mol d'acide adipique, selon la demande WO99/64496.
- PA2: polyamide 66 linéaire de faible fluidité, obtenu par ajout en polymérisation de 0,075 % en poids d'acide acétique.
- PA3: copolyamide 66.6 (90%/10% en poids) linéaire de faible fluidité, obtenu par ajout en polymérisation de 0,06 % en poids d'acide acétique.
- PA4 : polyamide 66 linéaire ayant les teneurs en groupements terminaux suivants : GTA=45 meq/kg, GTC=65 meq/kg.
- PA5: polyamide obtenu par mélange de PA4, de 12 % en poids de polyamide 6 et de 0,35 % en poids d'acide isophtalique, dans l'extrudeuse pour la fabrication des granulés.
- PA6: polyamide 6, ayant une relative viscosité de 145 selon la norme ISO 307 (acide formique 90%).
- PA7: polyamide 6 étoile obtenu par copolymérisation à partir de caprolactame en présence de 0,46 % en mol de 2,2,6,6-tetrakis-($\beta$-carboxyéthyl)-cyclohexanone, selon la demande WO97/24388.

Des granulés de compositions polyamides sont obtenues en utilisant une extrudeuse classique bi-vis du type Werner&Pfleiderer ZSK 40, avec une vitesse de rotation des vis de 240 rpm et une vitesse de sortie de 40 Kg/h, de façon à mélanger le polyamide, des fibres de verres et approximativement 1% en poids d'additifs classiques. Lesdits additifs sont solubilisés de manière homogène dans le polyamide.

Profile de température en degré Celsius :

- pour les polyamides de type 6 : Zone 1 : 230 ; Zone 2 : 235 ; Zone 3 : 235 ; Zone 4 : 240 ; Zone 5 : 240 ; Zone 6 : 240 ; Zone 7 : 245 ; Zone 8 : 245 et
- pour les polyamides de type 66 : Zone 1 : 250 ; Zone 2 : 260 ; Zone 3 : 260 ; Zone 4 : 260 ; Zone 5 : 270 ; Zone 6 : 270 ; Zone 7 : 270 ; Zone 8 : 280.

Pour les formulations polyamides comprenant 30 % en poids d'additifs dispersés de manière hétérogène, les fibres de verre, la viscosité apparente en phase fondue à ne pas dépasser est de 624 Pa.s pour un cisaillement de 100 s$^{-1}$ ($\eta$100), et de 248 Pa.s pour un cisaillement de 1000 s$^{-1}$ ($\eta$1000).

Pour la réalisation d'articles microcellulaires pour lesquels on veut apprécier l'aspect de surface, on utilise une machine Krauss Maffei KM650 / 3500 C2 diamètre 80mm pour fabriquer des articles de 500 grammes environ ; avec les paramètres suivants :

- pour les polyamides de type 6 : profil de température du cylindre de plastification de 230-260°C, température du moule de 80°C, vitesse d'injection de 45-30 mm/sec.
- pour les polyamides de type 66: profil de température du cylindre de plastification de 260-290°C, température du moule de 80°C, vitesse d'injection de 45-30 mm/sec.

Pour la réalisation d'articles microcellulaires pour lesquels on veut apprécier les propriétés mécaniques, on utilise le procédé de moulage par injection suivant, pour fabriquer des articles de 50 grammes environ :
On utilise une machine Arburg 420S.

Pour les polyamides de type 6: température du cylindre de plastification de 265°C, température du moule de 80°C. Pour les polyamides de type 66 : température du cylindre de plastification de 285°C, température du moule de 100°C. La vitesse d'injection est de 16 cm/sec.

Dans les deux procédés de fabrication, environ 0,3 % en poids de $N_2$ fluide à l'état supercritique sont introduit au polymère fondu pendant la phase de plastification dans la vis de l'appareil de moulage par injection, par l'intermédiaire d'injecteurs de gaz. La pression dans l'extrudeuse est d'au moins 100 bars.

**Exemple 2 : Mesure des propriétés des articles**

Les compositions finales des articles, leurs propriétés rhéologiques et leurs aspects de surface sont mentionnées dans le Tableau 1. Les propriétés mécaniques sont répertoriées dans le Tableau 2. Les pourcentages (%) dans les compositions sont en poids par rapport au total de la composition.

Tableau 1

| Echantillons | C1 | C2 | 3 | 4 | 5 | 6* | 7* |
|---|---|---|---|---|---|---|---|
| Polyamide | PA4 | PA6 | PA2 | PA5 | 33% PA2 + 30% PA3 | PA1 | PA7 |
| Fibres de verre (%) | 30 | 30 | 30 | 30 | 30 | 30 | 50 |
| Réduction de masse (%) | 10 | 10 | 10 | 10 | 10 | 10 | 10 |
| | | | | | | | |
| **Propriétés** | | | | | | | |
| η 100 | 791 | 996 | 417 | 402 | 410 | 484 | 820 |
| η 1000 | 299 | 360 | 160 | 150 | 148 | 205 | 253 |
| Température de fusion (°C) | 263 | 222 | 263 | 258 | 258 | 222 | 222 |
| Aspect de surface | Mauvais | Mauvais | Bon | Très bon | Très bon | Très bon | Bon |
| *Exemples selon l'invention | | | | | | | |

Table 2

| Echantillons | C1 | 3 | 4 | 5 | 6* |
|---|---|---|---|---|---|
| Polyamide | PA4 | PA2 | PA5 | 33% PA2 + 30% PA3 | PA1 |
| Fibres de verre (%) | 35 | 35 | 35 | 35 | 35 |
| Réduction de masse (%) | 10 | 10 | 10 | 10 | 10 |
| Choc Charpy non entaillé (KJ/m$^2$) | 66 | 54 | 66 | 56 | 62 |
| Contrainte à la rupture (N/mm$^2$) | 152 | 150 | 152 | 153 | 146 |
| Module de tension (N/mm$^2$) | 9320 | 9260 | 8890 | 9290 | 9480 |
| *Exemple selon l'invention | | | | | |

Les propriétés des articles sont évaluées comme suit :

- Contrainte à la rupture selon la norme ISO 527

- Elongation à la rupture selon la norme ISO 527

- Module de tension selon la norme ISO 527

- Résistance au choc Charpy non entaillé selon la norme ISO 179/1eU

- Température de fusion selon la norme ISO 1137-3 (DSC « METTLER DSC 20 », avec une augmentation de température de 10°C/min)

- Viscosité apparente en phase fondue mesurée selon la norme ISO 11443

- Aspect de surface selon une appréciation visuelle afin de déterminer si l'aspect de surface est bon ou mauvais. Il est considéré comme mauvais lorsqu'on observe à la surface des zones de blanchiment et des rugosités.

Dans tous les cas, la réduction de la masse de l'article, par rapport à un article obtenu par un procédé classique de moulage par injection, est de l'ordre de 10 %.

**Revendications**

1. Utilisation d'une composition comprenant au moins une matrice polyamide et des additifs, dans ou pour la fabrication d'un article polyamide microcellulaire par moulage par injection utilisant un fluide à l'état supercritique ; ladite composition polyamide présentant une viscosité apparente en phase fondue selon les relations suivantes :

$$\eta 100 \leq 12,82(X) + 239$$

$$\eta 1000 \leq 3,62(X) + 139$$

dans lesquelles $\eta$ est la viscosité apparente en phase fondue de la composition polyamide mesurée selon la norme ISO 11443 à une température de 15°C supérieure à la température de fusion de la composition polyamide ; soit à un taux de cisaillement de 100 $s^{-1}$, $\eta$100, soit à un taux de cisaillement de 1000 $s^{-1}$, $\eta$ 1000 ; et X correspond à la proportion en poids d'additifs dispersés de manière hétérogène dans la matrice polyamide, par rapport au poids total de la composition ; le polyamide étant un polyamide 6, un polyamide 66, un copolyamide 66.6 ; et les additifs dispersés de manière hétérogène dans la matrice polyamide étant des additifs solides organiques ou inorganiques, polymériques ou non, qui se dispersent dans la phase continue du polyamide et ne sont pas solubilisés dans la phase continue du polyamide ; **caractérisée en ce que** le polyamide est un polyamide étoile comprenant des chaînes macromoléculaires étoiles et le cas échéant des chaînes macromoléculaires linéaires, obtenu par mélange en polymérisation, en présence des monomères de polyamide, d'au moins un composé multifonctionnel comprenant au moins 3 fonctions réactives identiques de type fonction amine ou fonction acide carboxylique.

2. Utilisation selon la revendication 1, **caractérisé en ce que** les additifs dispersés de manière hétérogène dans la matrice polyamide sont des charges de renfort ou de remplissage, des agents modificateurs de la résistance aux chocs des polymères, des polymères, et/ou des composés ignifugeants.

3. Utilisation selon la revendication 1 ou 2, **caractérisée en ce que** le fluide supercritique est choisi dans le groupe comprenant le dioxyde de carbone, et l'azote.

4. Formulation à l'état fondu comprenant au moins une composition comprenant au moins une matrice polyamide et des additifs, ladite composition polyamide présentant une viscosité apparente en phase fondue selon les relations suivantes :

$$\eta 100 \leq 12,82(X) + 239$$

$$\eta 1000 \leq 3,62(X) + 139$$

dans lesquelles $\eta$ est la viscosité apparente en phase fondue de la composition polyamide mesurée selon la norme ISO 11443 à une température de 15°C supérieure à la température de fusion de la composition polyamide ; soit à un taux de cisaillement de 100 $s^{-1}$, $\eta$100, soit à un taux de cisaillement de 1000 $s^{-1}$, $\eta$1000 ; et X correspond à la proportion en poids d'additifs dispersés de manière hétérogène dans la matrice polyamide, par rapport au poids total de la composition ;

le polyamide étant un polyamide 6, un polyamide 66, un copolyamide 66.6; et

les additifs dispersés de manière hétérogène dans la matrice polyamide étant des additifs solides organiques ou inorganiques, polymériques ou non, qui se dispersent dans la phase continue du polyamide et ne sont pas solubilisés dans la phase continue du polyamide ;

**caractérisée en ce que**

le polyamide est un polyamide étoile comprenant des chaînes macromoléculaires étoiles et le cas échéant des chaînes macromoléculaires linéaires, obtenu par mélange en polymérisation, en présence des monomères de polyamide, d'au moins un composé multifonctionnel comprenant au moins 3 fonctions réactives identiques de type fonction amine ou fonction acide carboxylique, et un fluide à l'état supercritique.

5. Procédé de fabrication d'un article polyamide microcellulaire par moulage par injection comprenant au moins les étapes suivantes :

a) réaliser une formulation à l'état fondu tel que defini dans la revendication 4 par mélange d'une composition comprenant une matrice polyamide et des additifs, présentant une viscosité apparente en phase fondue selon les relations mentionnées dans la revendication 4, avec un fluide à l'état supercritique ; de façon à dissoudre ledit fluide à l'état supercritique dans la matrice ;

b) injecter la formulation obtenue dans la chambre de moulage de l'appareil de moulage par injection en soumettant ladite composition à une baisse de pression pour provoquer une nucléation et la croissance de cellules ; et

c) laisser le mélange obtenu se solidifier en tant qu'article polyamide microcellulaire dans la chambre de moulage, le polyamide étant un polyamide 6, un polyamide 66, un copolyamide 66.6; et

les additifs dispersés de manière hétérogène dans la matrice polyamide étant des additifs solides organiques ou inorganiques, polymériques ou non, qui se dispersent dans la phase continue du polyamide et ne sont pas solubilisés dans la phase continue du polyamide ;

**caractérisée en ce que**

le polyamide est un polyamide étoile comprenant des chaînes macromoléculaires étoiles et le cas échéant des chaînes macromoléculaires linéaires, obtenu par mélange en polymérisation, en présence des monomères de polyamide, d'au moins un composé multifonctionnel comprenant au moins 3 fonctions réactives identiques de type fonction amine ou fonction acide carboxylique.

## Patentansprüche

1. Verwendung einer Zusammensetzung, die mindestens eine Polyamidmatrix und Additive umfasst, bei der oder zur Herstellung eines mikrozellulären Polyamidgegenstands durch Spritzguss unter Verwendung eines Fluids im überkritischen Zustand;

wobei die Polyamidzusammensetzung eine scheinbare Schmelzeviskosität gemäß den folgenden Beziehungen aufweist:

$$\eta\ 100 \leq\ 12{,}82(X) + 239$$

$$\eta\ 1000 \leq\ 3{,}62(X) + 139,$$

wobei $\eta$ die scheinbare Schmelzeviskosität der Polyamidzusammensetzung ist, gemessen gemäß der ISO-Norm 11443 bei einer Temperatur, die um 15 °C über der Schmelztemperatur der Polyamidzusammensetzung liegt, entweder bei einer Scherrate von 100 s$^{-1}$, $\eta$ 100, oder bei einer Scherrate von 1000 s$^{-1}$, $\eta$ 1000; und X dem Gewichtsanteil von in der Polyamidmatrix heterogen dispergierten Additiven, bezogen auf das Gesamtgewicht der Zusammensetzung, entspricht;

wobei es sich bei dem Polyamid um ein Polyamid 6, ein Polyamid 66 oder ein Copolyamid 66.6 handelt; und

wobei es sich bei den in der Polyamidmatrix heterogen dispergierten Additiven um polymere oder nichtpolymere organische oder anorganische feste Additive handelt, die in der kontinuierlichen Polyamidphase dispergiert und nicht in der kontinuierlichen Polyamidphase gelöst sind;

**dadurch gekennzeichnet, dass**

es sich bei dem Polyamid um ein Sternpolyamid mit sternförmigen makromolekularen Ketten und gegebenenfalls linearen makromolekularen Ketten handelt, das durch Beimischen mindestens einer multifunktionellen Verbindung mit mindestens 3 identischen reaktiven Funktionen vom Typ Aminfunktion oder Carbonsäurefunktion während der Polymerisation in Gegenwart der Polyamid-Monomere erhalten wird.

2. Verwendung nach Anspruch 1, **dadurch gekennzeichnet, dass** es sich bei den in der Polyamidmatrix heterogen dispergierten Additiven um verstärkende oder streckende Füllstoffe, Schlagzähigkeitsmodifikatoren für Polymere, Polymere und/oder Flammschutzmittel handelt.

3. Verwendung nach Anspruch 1 oder 2, **dadurch gekennzeichnet, dass** das überkritische Fluid aus der Gruppe umfassend Kohlendioxid und Stickstoff ausgewählt ist.

4. Schmelzflüssige Formulierung, umfassend mindestens eine Zusammensetzung, die mindestens eine Polyamidmatrix und Additive umfasst, wobei die Polyamidzusammensetzung eine scheinbare Schmelzeviskosität gemäß den folgenden Beziehungen aufweist:

$$\eta\ 100 \leq\ 12{,}82(X) + 239$$

$$\eta\ 1000 \leq\ 3{,}62(X) + 139,$$

wobei $\eta$ die scheinbare Schmelzeviskosität der Polyamidzusammensetzung ist, gemessen gemäß der ISO-Norm 11443 bei einer Temperatur, die um 15 °C über der Schmelztemperatur der Polyamidzusammensetzung liegt, entweder bei einer Scherrate von 100 s$^{-1}$, $\eta$ 100, oder bei einer Scherrate von 1000 s$^{-1}$, $\eta$ 1000; und X dem Gewichtsanteil von in der Polyamidmatrix heterogen dispergierten Additiven, bezogen auf das Gesamtgewicht der Zusammensetzung, entspricht;
wobei es sich bei dem Polyamid um ein Polyamid 6, ein Polyamid 66 oder ein Copolyamid 66.6 handelt; und wobei es sich bei den in der Polyamidmatrix heterogen dispergierten Additiven um polymere oder nichtpolymere organische oder anorganische feste Additive handelt, die in der kontinuierlichen Polyamidphase dispergiert und nicht in der kontinuierlichen Polyamidphase gelöst sind; **dadurch gekennzeichnet, dass**
es sich bei dem Polyamid um ein Sternpolyamid mit sternförmigen makromolekularen Ketten und gegebenenfalls linearen makromolekularen Ketten handelt, das durch Beimischen mindestens einer multifunktionellen Verbindung mit mindestens 3 identischen reaktiven Funktionen vom Typ Aminfunktion oder Carbonsäurefunktion und eines Fluids im überkritischen Zustand während der Polymerisation in Gegenwart der Polyamid-Monomere erhalten wird.

5. Verfahren zur Herstellung eines mikrozellulären Polyamidgegenstands durch Spritzguss, das die folgenden Schritte umfasst:

a) Herstellen einer schmelzflüssigen Formulierung gemäß Anspruch 4 durch Mischen einer Zusammensetzung, die eine Polyamidmatrix und Additive umfasst und eine scheinbare Schmelzeviskosität gemäß den in Anspruch 4 angegebenen Beziehungen aufweist, mit einem Fluid im überkritischen Zustand derart, dass sich das Fluid im überkritischen Zustand in der Matrix löst;
b) Einspritzen der erhaltenen Formulierung in die Formkammer der Spritzgussapparatur, wobei die Zusammensetzung einer Druckerniedrigung unterworfen wird, um eine Nukleierung und das Wachstum der Zellen zu bewirken; und
c) Festwerdenlassen der erhaltenen Mischung als mikrozellulärer Polyamidgegenstand in der Formkammer,

wobei es sich bei dem Polyamid um ein Polyamid 6, ein Polyamid 66 oder ein Copolyamid 66.6 handelt; und wobei es sich bei den in der Polyamidmatrix heterogen dispergierten Additiven um polymere oder nichtpolymere organische oder anorganische feste Additive handelt, die in der kontinuierlichen Polyamidphase dispergiert und nicht in der kontinuierlichen Polyamidphase gelöst sind; **dadurch gekennzeichnet, dass**
es sich bei dem Polyamid um ein Sternpolyamid mit sternförmigen makromolekularen Ketten und gegebenenfalls linearen makromolekularen Ketten handelt, das durch Beimischen mindestens einer multifunktionellen Verbindung mit mindestens 3 identischen reaktiven Funktionen vom Typ Aminfunktion oder Carbonsäurefunktion während der Polymerisation in Gegenwart der Polyamid-Monomere erhalten wird.

## Claims

1. The use of a composition comprising at least one polyamide matrix and additives, in or for the manufacture of a microcellular polyamide article by injection molding using a fluid in the supercritical state; said polyamide composition having an apparent melt viscosity according to the following relationships:

$$\eta 100 \leq 12.82(X) + 239$$

$$\eta 1000 \leq 3.62(X) + 139$$

wherein $\eta$ is the apparent melt viscosity of the polyamide composition measured according to standard ISO 11443 at a temperature of 15°C above the melting point of the polyamide composition; either at a shear rate of 100 s$^{-1}$, $\eta 100$, or at a shear rate of 1000 s$^{-1}$, $\eta 1000$; and X corresponds to the weight proportion of additives dispersed heterogeneously in the polyamide matrix, relative to the total weight of the composition; the polyamide being a polyamide 6, a polyamide 66, a copolyamide 66.6; and the additives dispersed heterogeneously in the polyamide matrix being polymeric or nonpolymeric, organic or inorganic solid additives which disperse in the continuous phase of the polyamide and are not solubilized in the continuous phase of the polyamide; wherein the polyamide is a star polyamide comprising star macromolecular chains and, where appropriate, linear macromolecular chains, obtained by polymerization blending, in the presence of the polyamide monomers, of at least one multifunctional compound comprising at least 3 identical reactive functions of the amine function or carboxylic acid function type.

2. The use as claimed in claim 1, wherein the additives dispersed heterogeneously in the polyamide matrix are reinforcing or bulking fillers, agents that modify the impact resistance of the polymers, polymers, and/or flame-retardant compounds.

3. The use as claimed in claim 1 or 2, wherein the supercritical fluid is chosen from the group comprising carbon dioxide and nitrogen.

4. A formulation in the melt state comprising at least one composition comprising at least one polyamide matrix and additives, said polyamide composition having an apparent melt viscosity according to the following relationships:

$$\eta 100 \leq 12.82(X) + 239$$

$$\eta 1000 \leq 3.62(X) + 139$$

wherein $\eta$ is the apparent melt viscosity of the polyamide composition measured according to standard ISO 11443 at a temperature of 15°C above the melting point of the polyamide composition; either at a shear rate of 100 s$^{-1}$, $\eta 100$, or at a shear rate of 1000 s$^{-1}$, $\eta 1000$; and X corresponds to the weight proportion of additives dispersed heterogeneously in the polyamide matrix, relative to the total weight of the composition; the polyamide being a polyamide 6, a polyamide 66, a copolyamide 66.6; and the additives dispersed heterogeneously in the polyamide matrix being polymeric or nonpolymeric, organic or inorganic solid additives which disperse in the continuous phase of the polyamide and are not solubilized in the continuous phase of the polyamide; wherein the polyamide is a star polyamide comprising star macromolecular chains and, where appropriate, linear macromolecular chains, obtained by polymerization blending, in the presence of the polyamide monomers, of at least one multifunctional compound comprising at least 3 identical reactive functions of the amine function or carboxylic acid function, and a fluid in the supercritical state.

5. A process for manufacturing a microcellular polyamide article by injection molding, comprising at least the following steps:

a) producing a formulation in the melt state as defined in claim 4 by blending a composition comprising a polyamide matrix and additives, having an apparent melt viscosity according to the relationships mentioned in claim 4, with a fluid in the supercritical state; so as to dissolve said fluid in the supercritical state in the matrix;
b) injecting the formulation obtained in the molding chamber of the injection-molding device by subjecting said composition to a drop in pressure in order to bring about nucleation and growth of cells; and
c) letting the mixture obtained solidify as a microcellular polyamide article in the molding chamber,

the polyamide being a polyamide 6, a polyamide 66, a copolyamide 66.6; and
the additives dispersed heterogeneously in the polyamide matrix being polymeric or nonpolymeric, organic or inorganic solid additives which disperse in the continuous phase of the polyamide and are not solubilized in the continuous phase of the polyamide;
wherein
the polyamide is a star polyamide comprising star macromolecular chains and, where appropriate, linear macromolecular chains, obtained by polymerization blending, in the presence of the polyamide monomers, of at least one multifunctional compound comprising at least 3 identical reactive functions of the amine function or carboxylic acid function type.

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5158986 A
- JP 2002363326 A
- JP 2005126545 A
- US 2005187322 A1
- WO 9724388 A
- WO 9964496 A
- US 3796779 A
- EP 1264672 A

**Littérature non-brevet citée dans la description**

- **K. T. OKAMOTO.** Microcellular Processing. C. Hanser Verlag, 2003, 6
- Supercritical carbon dioxide in polymer reaction engineering. Wiley-VCH Verlag GmbH & Co. KGaA, 2005, 6
- **R. LACALLADE.** *Plastics Engineering,* Juin 1976, vol. 32, 40-42
- la référence Supercritical Carbon Dioxide in Polymer Reaction Engineerin. WILEY-VCH, 2005, 3-6